# EUROPEAN PATENT APPLICATION

(11) **EP 4 794 059 A1**
(43) Date of publication of application: **19.08.2026**
(21) Application number: 25227481.6
(22) Date of filing: 29.12.2025
(51) Int. Cl.: H01M 10/615, H01M 10/647, H01M 10/658, H01M 50/209, H01M 10/6553, H01M 10/657, H01M 10/6571, H05B 3/26

(54) **HEATING SHEET OF BATTERY CELL FOR THERMAL PROPAGATION EVALUATION AND THERMAL PROPAGATION EVALUATION APPARATUS INCLUDING THE SAME**

(30) Priority: 13.02.2025 KR 20250018360
(71) Applicant: Samsung SDI Co., Ltd., Yongin-si, Gyeonggi-do 17084 (KR)
(72) Inventor: SON, Min Gon, 16678 SUWON-SI (KR); IM, Jang Yeong, 16678 SUWON-SI (KR); PARK, Jong Taek, 16678 SUWON-SI (KR)
(74) Representative: Regimbeau

(57) **Abstract**

Disclosed are a heating sheet of a battery cell for a thermal propagation evaluation and a thermal propagation evaluation apparatus including the same. A thermal propagation evaluation apparatus (100) according to embodiments includes a power source (130), a housing (110) including a cell occupancy space, in which a plurality of battery cells (C1-C5) including a target battery cell are disposed in parallel, and a heating sheet connected to the power source and configured to heat the target battery cell (120) in the housing, wherein the heating sheet includes a cover in a sheet shape having an area corresponding to one surface of the battery cell and a predetermined thickness and a heating member including a heating coil pattern disposed in one region inside the cover and electrically connected to the external power source, and an area of a region in which the heating coil pattern is disposed may range from 5 to 20% of an area of the cover.

## Description

### FIELD

The present disclosure relates to an apparatus for evaluating thermal propagation of a battery cell, and more specifically, to a heating sheet for heating any one battery cell in order to evaluate thermal propagation between battery cells accommodated in a battery pack, and a thermal propagation evaluation apparatus including the same.

### BACKGROUND

Secondary batteries are batteries capable of being charged and discharged unlike primary batteries that cannot be charged. Low-capacity secondary batteries are used in small portable electronic devices such as smartphones, feature phones, notebook computers, digital cameras, and camcorders, and large-capacity secondary batteries are widely used as batteries for power sources for driving motors and power storage in hybrid vehicles, electric vehicles, and the like. Such a secondary battery includes an electrode including a positive electrode and/or a negative electrode, an electrode assembly including the electrode, a case for accommodating the electrode assembly, an electrode terminal connected to the electrode assembly, and the like.

With the development of this technology, high-capacity batteries are required. Accordingly, a plurality of batteries may be electrically connected and used. For example, batteries may be applied to an electronic device in the form of a battery module including a plurality of batteries (hereinafter, battery cells) and/or a battery pack including a plurality of battery modules. In some embodiments, a battery pack is formed of a plurality of battery cells. In this circumstance, an electronic device requires high-output power and/or a high capacity and includes, for example, an electric vehicle or the like.

In a battery cell, a thermal runaway phenomenon may occur due to a cell defect such as an internal short circuit, an electrical or physical impact during charging and discharging, over-charging, etc. In addition, in a battery pack in which a plurality of battery cells are arranged adjacent to each other, when a thermal runaway phenomenon occurs in any one battery cell, heat may be propagated to the nearby battery cells. When thermal runaway phenomena occur in the plurality of battery cells in the battery pack due to such thermal propagation, a fire or large explosion may occur in the entire battery pack.

Accordingly, a thermal propagation evaluation for evaluating the risk of a chain reaction toward nearby battery cells when a thermal runaway occurs is performed on a battery pack. More specifically, in the thermal propagation evaluation, thermal propagation of the battery cell is evaluated through a method of measuring an extent of thermal propagation to nearby battery cells from the battery cell in which the thermal runaway phenomenon occurs, for example, measuring a temperature of an adjacent battery cell after a predetermined time has passed and/or a time it takes for the adjacent battery cell to reach a specific temperature.

In order to evaluate such thermal propagation, an evaluation needs to be performed by intentionally heating one battery cell (a target battery cell) accommodated in a battery pack to cause a thermal runaway phenomenon, and then measuring a situation in which the thermal propagation phenomenon is propagated to adjacent battery cells. A heating sheet is generally used to intentionally heat the target battery cell.

The herein-described information described in the background technology of this disclosure is only for facilitating understanding of the background of the present disclosure and therefore may also include information that does not constitute the related art.

### SUMMARY

The present disclosure is directed to providing a heating sheet of a battery cell capable of improving the reliability of a thermal propagation evaluation, and a thermal propagation evaluation apparatus including the same.

The present disclosure is also directed to providing a heating sheet of a battery cell, which is capable of minimizing a thermal effect on nearby battery cells while heat is applied to any one battery cell to cause a thermal runaway phenomenon for a thermal propagation evaluation, and a thermal propagation evaluation apparatus including the same.

However, technical objects to be achieved through the present disclosure are not limited to the herein-described objects, and other objects which are not described herein will be clearly understood by those skilled in the art from the following description of the present disclosure.

The invention disclosure relates to a heating sheet and a thermal propagation evaluation apparatus as defined in the appended claims.

In accordance with aspects of the present disclosure, there is provided a heating sheet connected to an external power source to heat a battery cell, which includes a cover in a sheet shape having an area corresponding to one surface of the battery cell and a predetermined thickness and a heating member having a heating coil pattern disposed in one region inside the cover and electrically connected to the external power source, wherein an area of a region in which the heating coil pattern is disposed ranges from 5 to 20% of an area of the cover.

According to aspects of the embodiment, the area of the region in which the heating coil pattern is disposed may range from 6 to 12% of the area of the cover.

According to aspects of the embodiment, the heating coil pattern may be located in a central portion of the cover in the sheet shape.

According to aspects of the embodiment, the cover may be formed of a heat-resistant material with a heat-resistance temperature of 500 °C or higher. For example, the heat-resistant material may include mica.

In accordance with aspects of the present disclosure, there is provided a thermal propagation evaluation apparatus including a power source, a housing including a cell occupancy space, in which a plurality of battery cells including a target battery cell are disposed in parallel, and a heating sheet connected to the power source and configured to heat the target battery cell in the housing, wherein the heating sheet includes a cover in a sheet shape having an area corresponding to one surface of the battery cell and a predetermined thickness and a heating member including a heating coil pattern disposed in one region inside the cover and electrically connected to the external power source, and an area of a region in which the heating coil pattern is disposed ranges from 5 to 20% of an area of the cover.

According to aspects of the embodiment, the thermal propagation evaluation apparatus may further include a thermally insulating member disposed between one sidewall plate of the housing and the cell occupancy space, wherein the heating sheet is disposed between the thermally insulating member and the cell occupancy space. In addition, the thermal propagation evaluation apparatus may further include an electrically insulating member disposed between adjacent battery cells of the plurality of battery cells.

According to aspects of the embodiment, the area of the region in which the heating coil pattern is disposed may range from 6 to 12% of the area of the cover.

According to aspects of the embodiment, the heating coil pattern may be located in a central portion of the cover.

According to aspects of the embodiment, the cover may be formed of a heat-resistant material having a heat-resistance temperature of 500 °C or higher. For example, the heat-resistant material may include mica.

### BRIEF DESCRIPTION OF THE DRAWINGS

Since the accompanying drawings of the present specification illustrate exemplary embodiments of the present disclosure, the present disclosure should not be interpreted in a limited sense with reference to the content in the accompanying drawings:
FIG. 1 is a schematic perspective view illustrating a configuration of a heating sheet according to one example of the present disclosure;
FIG. 2A is a schematic plan view illustrating a configuration of a heating member according to one example;
FIG. 2B is a schematic plan view illustrating a configuration of a heating member according to another example;
FIG. 3 is a schematic perspective view illustrating a configuration of a thermal propagation evaluation apparatus according to embodiments of the present disclosure;
FIG. 4 is a schematic block diagram illustrating the configuration of the thermal propagation evaluation apparatus of FIG. 3;
FIG. 5A is a comparison graph showing a required time it takes for a first battery cell to enter a thermal runaway state in test results of Table 1; and
FIG. 5B is a graph showing a change in temperature of a front surface of a second battery cell (C2) which is an adjacent cell when a first battery cell enters a thermal runaway state.

### DETAILED DESCRIPTION

Hereinafter, exemplary embodiments of the present disclosure will be described in detail with reference to the accompanying drawings. First, terms and words used in the present specification and claims should not be interpreted as being limited to commonly used meanings or meanings in dictionaries and should be interpreted as having meanings and concepts which are consistent with the technological scope of the present disclosure based on the principle that the inventors have appropriately defined concepts of the terms in order to describe the present disclosure in the best way. Therefore, since the embodiments described in this specification and components illustrated in the drawings are only some exemplary embodiments and do not represent the overall technological scope of the present disclosure, it should be understood that there may be various equivalents or modifications replacing the exemplary embodiments at the time of filing of this application.

In addition, the terms "comprise," "include," "comprising," and/or "including" used in the present specification specify the presence of stated shapes, numbers, steps, operations, members, elements, and/or groups thereof but do not preclude the presence or addition of one or more other shapes, numbers, steps, operations, members, elements, and/or groups thereof.

In addition, in order to facilitate understanding of the present disclosure, the accompanying drawings are not drawn to actual scale, and the dimensions of some components may be exaggerated. In addition, like reference numerals may be assigned to like elements in different embodiments.

The statement that two comparative objects are "the same" means that they are "substantially the same." The term "substantially the same" includes a circumstance in which there is a deviation considered as a low level in the art, for example, a deviation of 5% or less. In addition, when it is described that some parameters are uniform within a certain region, it may mean that the parameters are uniform from an average perspective."

Although terms such as "first," "second," or the like may be used for describing various elements, the elements are not limited by these terms. These terms are only used to distinguish one element from another element, and unless otherwise specifically described, a first element may also be a second element.

Throughout the specification, unless specifically described otherwise, each element may be singular or plural.

A circumstance in which a first element is disposed "over (or under)" or "above (or below)" a second element may include a case in which the first element is disposed in contact with an upper (or lower) surface of the second element or a case in which a third element is interposed between the first element and the second element disposed over (or under) the first element.

When a first element is referred to as being "disposed on," connected to," or "coupled to" a second element, although the first element may be directly connected or bonded to the second element, it should be understood that a third element may be interposed therebetween, or the first and second elements may be connected, coupled, or bonded through the third element.

As used in the present specification, the term "and/or" includes any one or more and all combinations of the associated listed items. In addition, when embodiments of the present disclosure are described, the use of "may" relates to "one or more embodiments of the present disclosure." Expressions such as "one or more" and "at least one" before a list of elements modify the list of elements as a whole and do not modify the individual elements of the list.

Throughout the specification, unless otherwise specifically described, "A and/or B" means A, B, or A and B. Unless otherwise specifically described, "C to D" means more than or equal to C and less than or equal to D.

When the phrase "at least one of A, B, and C," "at least one of A, B, or C," "at least one selected from the group consisting of A, B, and C," or "at least one selected from A, B, and C" is used to indicate a list of elements A, B and C, the phrase may refer to any suitable combination thereof.

The term "use" may be considered synonymous with term "utilize." As used in the present specification, the terms "substantially," "about," and words similar thereto are used as terms of approximation rather than terms of degree, and are intended to consider intrinsic variations in measured or calculated values recognized by those skilled in the art.

Although the terms "first," "second," "third," etc. may be used in the present specification to describe various elements, components, regions, layers, and/or sections, these elements, components, regions, layers, and/or sections should not be limited by these terms. These terms are only used to distinguish one element, component, region, layer, or cross section from another element, component, region, layer, or cross section. Accordingly, a first member, component, region, layer, or section could be named a second element, component, region, layer, or section without departing from the teachings of the exemplary embodiments.

Spatially relative terms "beneath," "below," "lower," "above," "upper," etc., may be used to describe relationships between one component or feature and another component(s) or feature(s) illustrated in the drawings. A spatially relative location may be understood to encompass different orientations of devices, which are being used or operated, in addition to orientations illustrated in the drawings. For example, when a device in the drawing is flipped over, an element described as "under" or "below" another element is understood to be "over" or "above" the other element. Accordingly, the term "below" encompasses both "above" and "below."

Terms used in the present specification are used to describe embodiments of the present disclosure and are not intended to limit the present disclosure.

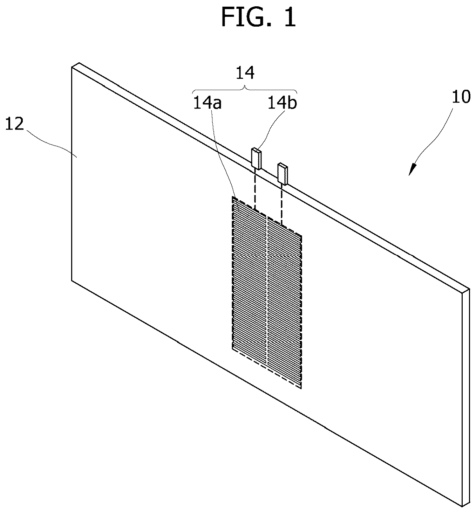

FIG. 1 is a schematic perspective view illustrating a configuration of a heating sheet according to one example of the present disclosure. Referring to FIG. 1, a heating sheet 10 includes a sheet-shaped cover 12 and a heating member 14. The heating sheet 10 may be a device in which the heating member 14 generates heat when a current is supplied to the heating sheet 10 from an external power source and may be a heating means disposed close to a target battery cell to heat only the target battery cell in a thermal propagation evaluation apparatus.

The cover 12 may be formed of an electrically insulating material having a predetermined thickness. As the cover 12 is formed of the electrically insulating material, the heating member 14 may be prevented from being electrically short-circuited with another conductive member disposed close thereto. For example, the cover 12 formed of the electrically insulating material may prevent the heating member 14 from being short-circuited with the target battery cell during a thermal propagation evaluation. A type of the electrically insulating material is not specifically limited.

In addition, the cover 12 may be formed of a heat-resistant material with heat-resistance. As the cover 12 is formed of the heat-resistant material, even when a temperature of the heating member 14 disposed therein rises to a predetermined temperature or higher, the cover 12 may be prevented from being damaged or broken. For example, the cover 12 may be formed of a material including a plastic resin, which includes mica, polyimide, etc., aramid, melanin, a silicone resin, or the like.

According to one example of embodiments, the cover 12 may be formed of the heat-resistant material which may withstand temperatures of 500 °C or higher. Accordingly, as will be described herein, even when a temperature of the heating member 14 is high, such as 500 °C or higher, the cover 12 may be prevented from being damaged or broken. For example, the cover 12 may be formed of the heat-resistant material such as mica, and accordingly, even when a maximum temperature of the heating member 14 rises to a temperature of 500 to 700 °C, the cover 12 may not be damaged.

However, the cover 12 formed of the heat-resistant material should be as thin as possible to smoothly propagate heat generated by the heating member 14 to the outside. However, the cover 12 should have a thickness allowing the heating member 14 to be disposed in the cover 12. In addition, the cover 12 should have a thickness that not only secures electrical insulation but also prevents thermal damage to a portion in contact with the heating member 14 with a high temperature. In consideration of this, the cover 12 may have a thickness of about 0.5 to 0.9 mm and more preferably about 0.65 to 0.8 mm.

A size of the cover 12 may be properly determined in consideration of a size of the target battery cell. For example, the cover 12 may have an area corresponding to one surface of the target battery cell. Hereinafter, "corresponding to" is defined as being equal to or different by less than 5%. When the target battery cell is a prismatic battery, the cover 12 may have an area corresponding to a side surface of the prismatic battery, that is, the widest surface of a hexagonal prismatic battery. Accordingly, since the heating sheet 10 is in surface contact with the widest region of the target battery cell as possible, the heat of the heating sheet 10 may be more quickly propagated to the target battery cell.

The heating member 14 may be a device which is located in the cover 12 and generates heat when receiving a current from an external power source. To this end, the heating member 14 may include a heating coil pattern 14a which is a means for converting electric energy into thermal energy. In addition, connectors 14b for being connected to the external power source may be connected to both end portions of the heating coil pattern 14a. As described herein, the heating member 14 may be connected to the external power source through the connectors 14b, and a specific configuration or shape of each of the connectors 14b is not specifically limited as long as the connectors 14b are electrically connected to the external power source.

According to embodiments, in order for the heating member 14 to heat only a partial region of the target battery cell, the heating coil pattern 14a may be disposed in only one region of the cover 12. More specifically, the heating coil pattern 14a may be disposed in the cover 12 to occupy 5 to 20% of the area of the cover 12. Preferably, the heating coil pattern 14a may be disposed in the cover 12 to occupy 6 to 12% of the area of the cover 12.

When the heating member 14 is disposed to intensively heat the partial region of the target battery cell as described herein, a heat flux is fast, thereby reducing a time it takes for a temperature of the target battery cell to rise to a desired temperature. Particularly, in embodiments, since the cover 12 has a relatively large thickness of about 0.5 to 0.9 mm and preferably about 0.65 to 0.8 mm, the fast heat flux intensively heats a small region, thereby effectively propagating heat to the target battery cell.

In addition, the heating coil pattern 14a of the heating member 14 may be disposed in a central portion of the cover 12. Accordingly, since the heating coil pattern 14a is relatively far from members (for example, a housing, a busbar, a cooling plate, etc.) disposed around the target battery cell, a thermal effect on the members can be minimized.

More specifically, the heating coil pattern 14a may be disposed to overlap a center of the cover 12. For example, when a planar shape of the cover 12 is a rectangular shape, the heating coil pattern 14a may be disposed at the exact center of the cover 12 to overlap a center of the rectangular shape. When the heating member 14 is disposed to heat a central portion of the target battery cell as described herein, heat propagated to the other members including the housing in the thermal propagation evaluation apparatus can be reduced as much as possible.

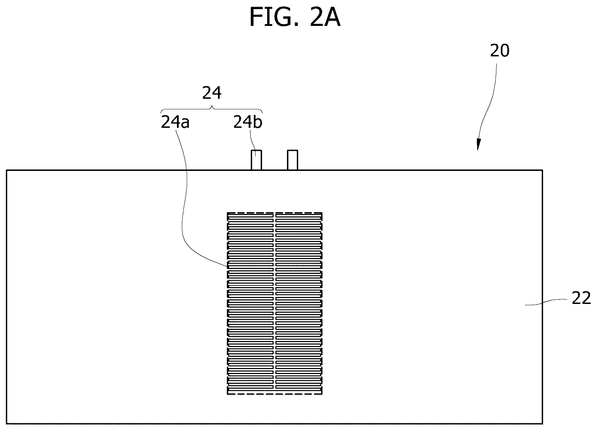

FIG. 2A is a schematic plan view illustrating a configuration of a heating member according to one example.

Referring to FIG. 2A, a heating sheet 20 includes a cover 22 and a heating member 24. The cover 22 may be formed of mica and have, for example, a rectangular shape with a size of 214 mm in width and 101 mm in length. A thickness of the cover 22 may be about 0.7 mm. In addition, a heating coil pattern 24a of the heating member 24 may be disposed in a substantially central portion of the cover 22, and a region in which the heating coil pattern 24a is disposed may be a rectangular region with a size of, for example, 36 mm in width and 72 mm in length. Connectors 24b of the heating member 24 may be disposed at an upper side. As described herein, in the heating sheet 20 of the present example, an area of the region in which the heating coil pattern 24a is disposed corresponds to about 11.9% of an area of the cover 22.

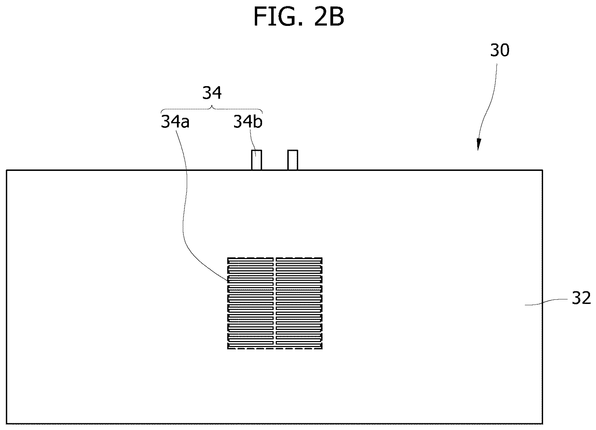

FIG. 2B is a schematic plan view illustrating a configuration of a heating member according to another example.

Referring to FIG. 2B, a heating sheet 30 includes a cover 32 and a heating member 34. The cover 32 is the same as the cover 22 illustrated in FIG. 2A. That is, the cover 32 may be formed of mica and have, for example, a rectangular shape with a size of 214 mm in width and 101 mm in length. In addition, a thickness of the cover 32 may be about 0.7 mm. In addition, a heating coil pattern 34a of the heating member 34 may be disposed in a substantially central portion of the cover 32, and a region in which the heating coil pattern 34a is disposed may be a square region with a size of, for example, 36 mm in width and 36 mm in length. Connectors 34b of the heating member 34 may be disposed at an upper side. As described herein, in the heating sheet 30 of the present example, an area of the region in which the heating coil pattern 34a is disposed corresponds to about 6% of an area of the cover 32.

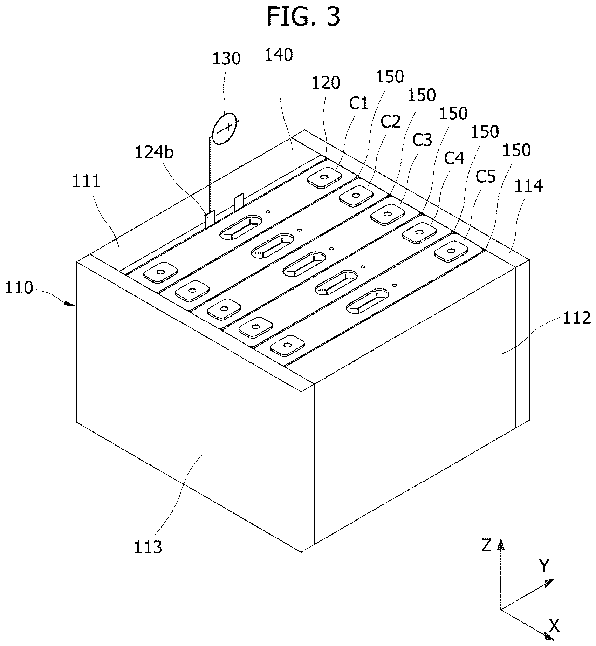

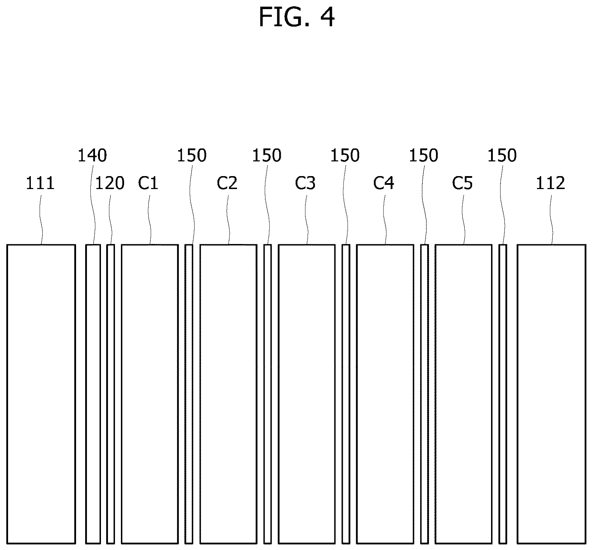

FIG. 3 is a schematic perspective view illustrating a configuration of a thermal propagation evaluation apparatus according to embodiments of the present disclosure. FIG. 4 is a schematic block diagram illustrating the configuration of the thermal propagation evaluation apparatus of FIG. 3. In FIGS. 3 and 4, the thermal propagation evaluation apparatus in which five battery cells C1 to C5 are disposed in a row to evaluate thermal propagation is illustrated, but the number of battery cells disposed in the thermal propagation evaluation apparatus is not limited thereto.

Referring to FIGS. 3 and 4, a thermal propagation evaluation apparatus 100 includes a housing 110, a heating sheet 120, and a power source 130. In addition, the thermal propagation evaluation apparatus 100 may further include a thermally insulating member 140. In addition, the thermal propagation evaluation apparatus 100 may further include an electrically insulating member 150. In addition, although not illustrated in the drawings, the thermal propagation evaluation apparatus 100 may further include members that are generally provided in a battery pack, for example, a busbar and a cooling plate. As described herein, as the components of the thermal propagation evaluation apparatus 100 correspond to components of an actual battery pack, effectiveness of a thermal propagation evaluation performed by the thermal propagation evaluation apparatus 100 can be improved.

The housing 110 may form an overall exterior of the thermal propagation evaluation apparatus 100 and provide a space in which the plurality of battery cells C1 to C5 may be accommodated. The housing 110 may be hollow to accommodate the plurality of battery cells C1 to C5 and have a substantially rectangular hexahedral shape. However, the present disclosure is not limited thereto, and the housing 110 may have a shape other than the rectangular hexahedral shape as long as the housing 110 may accommodate the plurality of battery cells C1 to C5.

The rectangular hexahedral shaped housing 110 may include a front plate 111, a rear plate 112, a left plate 113, and a right plate 114. In addition, although not illustrated in the drawings, the housing 110 may further include a lower plate and an upper plate. A thickness, a shape, a size, and the like of each of the plates 111 to 114 of the housing 110 illustrated in the drawing are arbitrary and may be changed according to a thickness, a shape, a size, and the like of each of the members accommodated in the housing 110, such as the plurality of battery cells C1 to C5, the insulating members 140 and 150, the busbar, and a cooling member.

The lower plate may be disposed at a lower side of the housing 110 in a Z-axis direction. The lower plate may form a lower exterior of the housing 110. The lower plate may have a rectangular plate shape.

The front plate 111 and the rear plate 112 may be disposed on both end portions of the housing 110 in an X-axis direction. In addition, the left plate 113 and the right plate 114 may be disposed on both end portions of the housing 110 in a Y-axis direction. The front plate 111, the rear plate 112, the left plate 113, and the right plate 114 may form a perimetric exterior of the housing 110. Each of the front plate 111, the rear plate 112, the left plate 113, and the right plate 114 may have a plate shape extending from an edge of the lower plate. The front plate 111, the rear plate 112, the left plate 113, and the right plate 114 may be sidewall plates disposed to surround a space above the lower plate. The front plate 111, the rear plate 112, the left plate 113, and the right plate 114 may be disposed to form a rectangular cross-sectional shape.

The front plate 111 and the rear plate 112 may be disposed to face each other in a longitudinal direction (X direction) of the housing 110. The front plate 111 and the rear plate 112 may be disposed in parallel. Areas of the front plate 111 and the rear plate 112 may be the same. The front plate 111 and the rear plate 112 may be disposed at both ends of the plurality of battery cells C1 to C5 in an arrangement direction (the X direction) to face the outermost battery cells C1 and C5. The front plate 111 and the rear plate 112 may have greater thicknesses than the other members, for example, the left plate 113 and the right plate 114, and press the plurality of battery cells C1 to C5 inward.

The left plate 113 and the right plate 114 may be disposed to face each other in a width direction (Y direction) of the housing 110. The left plate 113 and the right plate 114 may be disposed in parallel. Areas of the left plate 113 and the right plate 114 may be the same.

The upper plate may be coupled to an upper end of each of the front plate 111, the rear plate 112, the left plate 113, and the right plate 114. The upper plate may be disposed to face the lower plate in a vertical direction (Z direction) of the housing 110. The upper plate may be disposed parallel to the lower plate. An area of the upper plate may be the same as an area of the lower plate.

The heating sheet 120 may be disposed close to any one battery cell of the plurality of battery cells C1 to C5. For example, among the plurality of battery cells C1 to C5, the heating sheet 120 may be disposed close to a frontmost surface, that is, a first battery cell C1 close to the front plate 111. In this circumstance, the first battery cell C1 may be a target battery cell. However, the present disclosure is not limited thereto, and the heating sheet 120 may be disposed close to any battery cell of the plurality of battery cells C1 to C5.

The heating sheet 120 may correspond to the heating sheet 10 described with reference to FIG. 1. Accordingly, the heating sheet 120 may include a cover and a heating member. In addition, the heating member may include a heating coil pattern disposed inside the cover and a pair of connecting members 124b electrically connected to both end portions of the heating coil pattern. An area of the cover of the heating sheet 120 may correspond to an area of a front surface of the first battery cell C1.

The power source 130 is for supplying electric energy to the heating sheet 120. To this end, the power source 130 may be electrically connected to the connecting members 124b of the heating sheet 120. Electric wires which electrically connect the power source 130 to the connecting members 124b may pass through the housing 110 and electrically connect the power source 130 to the connecting members 124b.

According to one example of embodiments, the thermally insulating member 140 may be disposed between the heating sheet 120 and the housing 110. More specifically, the thermally insulating member 140 may be disposed between the heating sheet 120 and the front plate 111 of the housing 110 to prevent or suppress heat generated by the heating sheet 120 from being propagated to nearby members such as the front plate 111. Accordingly, since most of the heat generated by the heating sheet 120 is propagated to the first battery cell C1, the first battery cell C1 which is the target battery cell may be intensively heated.

A material, a type, and a configuration of the thermally insulating member 140 are not specifically limited. For example, in the thermally insulating member 140, a thermally insulating film formed of mica or the like may be bonded to both surfaces of an electrically insulating film by an adhesive film (for example, a hot-melt film). Accordingly, the thermally insulating member 140 may block propagation of the heat generated by the heating sheet 120 and also secure electric insulation between the heating sheet 120 and the front plate 111.

According to another example of embodiments, the electrically insulating member 150 may be interposed between the adjacent battery cells C1 to C5. More specifically, the electrically insulating member 150 may be disposed between the adjacent battery cells C1 to C5 such as between the first battery cell C1 and the second battery cell C2 to prevent the plurality of battery cells C1 to C5 from being electrically short-circuited.

A material, a type, and a configuration of the electrically insulating member 150 are not specifically limited. For example, in the electrically insulating member 150, a thermally insulating film formed of mica or the like is bonded to both surfaces of an electrically insulating film by an adhesive film (for example, a hot-melt film). Accordingly, the electrically insulating member 150 may secure electrical insulation between the heating sheet 120 and the front plate 111 and also suppress thermal propagation between the adjacent battery cell C1 to C5.

Next, results of evaluating thermal propagation using heating sheets according to the embodiments of the present disclosure will be described.

### Example 1

In Example 1, thermal propagation features were evaluated using the thermal propagation evaluation apparatus 100 of FIGS. 3 and 4 including the heating sheet 20 illustrated in FIG. 2A. The heating sheet 20 was disposed close to the first battery cell C1, and the thermally insulating member 140 was disposed between the heating sheet 20 and the front plate 111. In addition, the electrically insulating member 150 was disposed between the adjacent battery cells C1 to C5. A configuration in which an electrically insulating film was interposed between mica sheets was used in each of the thermally insulating member 140 and the electrically insulating member 150. In this circumstance, the power source 130 applied power of 500 W to the heating sheet 20. In this circumstance, since the heating sheet 20 illustrated in FIG. 2A included the heating coil pattern 24a having a rectangular shape with a size of 36 mm in width and 72 mm in length, a heat flux was about 19.29 W/cm².

### Example 2

In Example 2, thermal propagation features were evaluated using the thermal propagation evaluation apparatus 100 of FIGS. 3 and 4 including the heating sheet 30 illustrated in FIG. 2B. The heating sheet 30 was disposed close to the first battery cell C1, and the thermally insulating member 140 was disposed between the heating sheet 30 and the front plate 111. In addition, the electrically insulating member 150 was disposed between the adjacent battery cells C1 to C5. A configuration in which an electrically insulating film was interposed between mica sheets was used in each of the thermally insulating member 140 and the electrically insulating member 150. In this circumstance, the power source 130 applied power of 300 W to the heating sheet 20. In this circumstance, since the heating sheet 20 illustrated in FIG. 2B included the heating coil pattern 34a having a square shape with a size of 36 mm in width and 36 mm in length, a heat flux was about 23.15 W/cm².

### Comparative Example

In Comparative Example, thermal propagation features of a polyimide film heater, of which a size was actually the same as a size of a front surface (having a rectangular shape with 220 mm in width and 102 mm in length) of the battery cell C1, were evaluated using the thermal propagation evaluation apparatus 100 of FIGS. 3 and 4. In the polyimide film heater, a heat line was arranged throughout an entire surface of the film. The polyimide film heater was close to the first battery cell C1, and the thermally insulating member 140 was disposed between the polyimide film heater and the front plate 111. In addition, the electrically insulating member 150 was disposed between adjacent battery cells C1 to C5. A configuration in which an electrically insulating film was interposed between mica sheets was used in each of the thermally insulating member 140 and the electrically insulating member 150. In this circumstance, the power source 130 applied power of 650 W to the polyimide film heater. In this circumstance, since the polyimide film heater had a size of 220 mm in width and 102 mm in length, a heat flux was about 3.37 W/cm2.

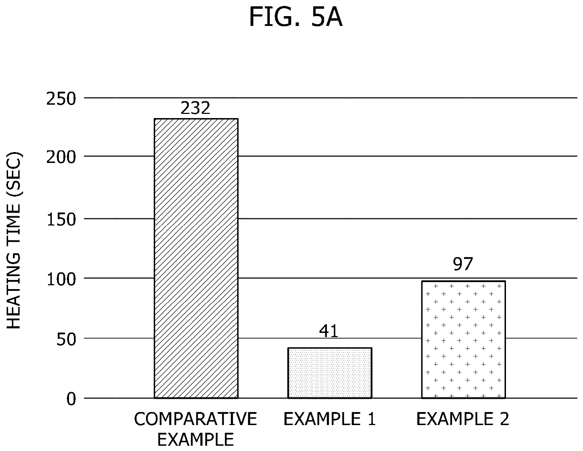

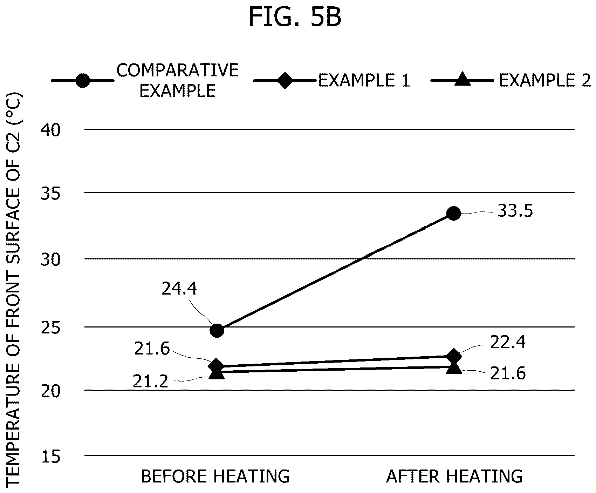

Table 1 shows test results according to Example 1, Example 2, and Comparative Example. In addition, FIG. 5A is a comparison graph showing a required time it takes for the first battery cell to enter a thermal runaway state in the test results of Table 1, and FIG. 5B is a graph showing a change in temperature of a front surface of the second battery cell C2 which is an adjacent cell when the first battery cell enters the thermal runaway state.

**[Table 1]**

| | Comparative Example | Example 1 | Example 2 |
|---|---|---|---|
| Time to thermal runaway of C1 (sec) | 232 | 41 | 97 |
| Temperature of C2 at thermal runaway of C1 (°C) | 33.5(24.4) | 22.4(21.6) | 21.2(21.6) |
| Time to thermal runaway of C2 (sec) | 99 | 223 | 324 |
| Time to thermal runaway of C3 (sec) | 315 | 521 | 665 |
| Time to thermal runaway of C4 (sec) | 488 | 829 | 1194 |
| Time to thermal runaway of C5 (sec) | 656 | 1121 | 2299 |

Referring to Table 1 and FIG. 5A, it can be seen that a time it takes for the first battery cell C1 which is the target battery cell to enter the thermal runaway state is 232 sec in the circumstance of Comparative Example and is 41 sec and 91 sec in the circumstance of Example 1 and Example 2, respectively. Accordingly, according to Example 1 and Example 2, as the first battery cell C1 is heated in an intensive central heating method, the time it takes for the first battery cell C1 to enter the thermal runaway state can be reduced compared to a conventional circumstance.

In addition, referring to Table 1 and FIG. 5B, it can be seen that a change in temperature of the front surface of the adjacent second battery cell C2 when the first battery cell C1 enters the thermal runaway state is about 9.1 °C in the circumstance of Comparative Example and 0.8 °C and 0.4 °C in the circumstance of Example 1 and Example 2, respectively. Accordingly, according to Example 1 and Example 2, it can be seen that, since the first battery cell C1 enters the thermal runaway state in a relatively short time, heat is not propagated to other nearby members, and a thermal effect on the adjacent battery cells C2 to C5 during heating of the target battery cell C1 can be minimized.

As a result, when the heating film heater of Comparative Example is used, the time it takes for the other battery cells C2 to C4 to enter a thermal runaway state is relatively short, which may not correspond to a speed of thermal propagation in an actual battery pack. However, when the heating sheet of each of Example 1 and Example 2 is used, the target battery cell C1 may enter the thermal runaway state in the short time, and a thermal effect on the surroundings while heat is propagated can be minimized, which may correspond to the speed of the thermal propagation in the actual battery pack.

Accordingly, in the circumstance of embodiments, since the target battery cell may enter the thermal runaway state in the relatively short time, and the thermal effect of the other battery cells until the target battery cell enters the thermal runaway state can be reduced, when the heating sheet and the thermal propagation evaluation apparatus including the same of embodiments are used, the objectivity of an evaluation of thermal propagation in the actual battery pack can be improved.

According to the herein-described embodiment of the present disclosure, the time it takes for a thermal runaway phenomenon to occur in a target battery cell can be reduced, thereby reducing a thermal effect on other nearby battery cells. In addition, heat can be intensively applied to a partial region of a central portion of the target battery cell, thereby suppressing temperatures of other components disposed around the battery cell, such as a busbar or a cooling plate, from rising.

However, effects which can be achieved through the present disclosure are not limited to the herein-described effects, and other effects which are not described herein will be clearly understood by those skilled in the art from the herein description of the present disclosure.

Although the present disclosure has been described with reference to embodiments illustrated in the accompanying drawings, these are merely exemplary. It will be understood by those skilled in the art that various modifications and other equivalent embodiments are possible from the embodiments of the present disclosure.

Therefore, the scope of the present disclosure should be defined by the appended claims.

## Claims

1. A heating sheet (10, 20, 30) adapted to be connected to an external power source to heat a battery cell, the heating sheet comprising:
a cover (12, 22, 32) in a sheet shape adapted to be disposed along one surface of the battery cell and having a predetermined thickness; and
a heating member (14, 24, 34) having a heating coil pattern (14a, 24a, 34a) disposed in one region inside the cover (12, 22, 32) and configured to be electrically connected to the external power source,
wherein an area of a region in which the heating coil pattern (14a, 24a, 34a) is disposed ranges from 5 to 20% of an area of the cover (12, 22, 32).

2. The heating sheet of claim 1, wherein the area of the region in which the heating coil pattern (14a, 24a, 34a) is disposed ranges from 6 to 12% of the area of the cover (12, 22, 32).

3. The heating sheet of claim 1 or claim 2, wherein the heating coil pattern (14a, 24a, 34a) is located in a central portion of the cover (12, 22, 32) in the sheet shape.

4. The heating sheet of any one of claims 1 to 3, wherein the cover (12, 22, 32) is formed of a heat-resistant material with a heat-resistance temperature of 500 °C or higher.

5. The heating sheet of claim 4, wherein the heat-resistant material includes mica.

6. A thermal propagation evaluation apparatus (100) comprising:
a power source (130);
a housing (110) including a cell occupancy space in which a plurality of battery cells (C1-C5) including a target battery cell are disposed in parallel; and
a heating sheet (120) according to any one of claims 1 to 5 disposed along one surface of the target battery cell, the heating sheet being connected to the power source (130) and configured to heat the target battery cell in the housing.

7. The thermal propagation evaluation apparatus of claim 6, further comprising a thermally insulating member (140) disposed between one sidewall plate of the housing and the cell occupancy space,
wherein the heating sheet (120) is disposed between the thermally insulating member (140) and the cell occupancy space.

8. The thermal propagation evaluation apparatus of claim 7, further comprising an electrically insulating member (150) disposed between adjacent battery cells of the plurality of battery cells.

9. The thermal propagation evaluation apparatus of any one of claims 6 to 8, wherein the heating sheet has an area corresponding to the surface of the target battery cell.

10. The thermal propagation evaluation apparatus of any one of claims 6 to 9, wherein the heating sheet is disposed along the widest surface of the target battery cell.

11. A method for thermal propagation evaluation of a battery pack comprising a plurality of battery cells (C1-C5), comprising:
- providing a thermal propagation evaluation apparatus (100) according to any one of claims 6 to 10,
- heating the target battery cell (C1) with the heating sheet (120), and
- determining a time to thermal runaway of each battery cell (C1-C5).
